# EUROPEAN PATENT APPLICATION

(11) **EP 2 326 089 A2**
(43) Date of publication of application: **25.05.2011**
(21) Application number: 10290074.3
(22) Date of filing: 15.02.2010
(51) Int. Cl.: H04N 7/173, H04N 5/00

(54) **Method and system for providing an interactive content player**

(30) Priority: 24.11.2009 EP 09306134
(71) Applicant: Mahfoda, Arié, 75116 Paris (FR)
(72) Inventor: Mahfoda, Arié, 75116 Paris (FR)
(74) Representative: Callon de Lamarck, Jean-Robert

(57) **Abstract**

The invention relates to a method for providing an interactive content player (2), comprising:
- providing the content player (2) adapted for playing a digital content;
- adding (E03) by a player manager (4) said digital content into said content player (2);
- assigning (E06) by an application directory (3) at least one application (33) to said content player (2);
- defining (E01) at least one first connector (21) in said content player (2) for accessing said application (33); and
- defining (E01) at least one second connector (22) in said content player (2) for accessing resources (5) needed for executing said application (33).

The invention also relates to a system (1) for providing an interactive content player for implementing the method.

## Description

### Field of the invention

The invention concerns the field of interactive communication. In particular, the invention related to a system for interactive communication and a method thereof.

### Background of the invention

lt is already known, with Web 2.0 technologies, to provide end users with access to interactive services.

ln particular, downloadable video contents with interactive areas are already known.

In these video contents, selectable interactive areas are displayed when video is displayed. These video contents can be found in video hosting services onto which an end user can upload a video content through an end-user terminal. The video content is stored in a video data base and is assigned a network address.

Interactive areas usually redirect to other downloadable video contents or to another network page when selected by the end user through the end-user terminal. Therefore, interactivity is poor and the end user can only be redirected to another website.

### Presentation

The invention aims to overcome one or more drawbacks of the prior art by providing a method for providing an interactive content player, comprising:
- providing the content player adapted for playing a digital content;
- adding by a player manager said digital content into said content player;
- assigning by an application directory at least one application to said content player;
- defining at least one first connector in said content player for accessing said application; and
- defining at least one second connector in said content player for accessing resources needed for executing said application.

Other optional and non-limiting features are:
- assigning comprises:
   ■ selecting an application stored in said application directory;
   ■ defining resource sizing needed by said application; and
   ■ defining an execution mode of said application;
- assigning further comprises defining a traffic usage pattern for said application for parting use of said application into two or more categories of end users; and computing needed resource amount for each category;
- said execution mode is selected among:
   ■ selecting an interactive area defined in said digital content or said content player, said interactive area appearing at a determined moment and location during playing of said digital content;
   ■ selecting a button-style interface defined in said content player;
   ■ sending a message through a device or software providing telephony services;
   ■ initiating an audio call or a video telephony call over circuit-switched, packet-switched networks or any communication access network;
   ■ initiating an event from a software program adapted to communicate with said content player;
- said message is an SMS or an MMS or an electronic message;
- said event is a remote procedure call between two terminals in different environments, or SOAP-services;
- the method further comprises adding said application into said application directory; wherein adding comprises:
   ■ uploading said application into said application directory;
   ■ defining application settings and billing parameters;
- said application is a determined application, and wherein said method further comprises at least:
   ■ defining additional first connector in said content player for accessing said determined application;
   ■ assigning a Unique Application IDentifier to said determined application;
      and at least one of the following:
   ■ defining additional second connector in said content player for accessing said resources needed for executing said determined application;
   ■ defining third connector in said content player for accessing additional resources needed for executing said determined application;
- the method further comprises:
   ■ implementing into said content player a dynamic real-time context sensitive graphical user interface for display by said content player;
   ■ establishing a telephony call over a circuit-switched or packet-switched network between said content player and said application;
   ■ initializing a signaling session over said telephony call;
   ■ establishing a graphical user interface control channel between said content player and said application;
   ■ controlling said graphical user interface by said application over said graphical user interface control channel;
      wherein said signaling session and said graphical user interface control channel are synchronized.

The invention also concerns a system for providing an interactive content player, comprising:
- a content player adapted for playing a digital content;
- a player manager for adding said digital content into said content player;
- an application directory for assigning at least one application to said content player;
- resources needed for executing said application; and
   wherein said content player is provided with at least one first connector for accessing said application and at least one second connector for accessing said resources.

Other optional and non-limiting features are:
- the application directory comprises a control panel adapted for at least one of the following action:
   ■ uploading said application into said application directory;
   ■ defining application settings and billing parameters;
   ■ selecting an application stored in said application directory;
   ■ defining resource sizing needed by said application;
   ■ defining a traffic usage pattern for said application for parting end user of said application into two or more categories of end users; and
   ■ defining an execution mode of said application;
- the system further comprises an resource allocation module for computing needed resource amount for each category of end users;
- the application director comprises a database for storing said application into said application directory;
- said application is a determined application, wherein said content player further comprises:
   ■ at least one additional first connector for accessing said determined application;
   ■ at least one additional second connector for accessing said determined application;
   ■ at least one third connector for accessing additional resources needed for executing said determined application;
- the system further comprises:
   ■ a circuit-switched or packet-switched network between said content player and said application for establishing a telephony call and initializing a signaling session over said telephony call;
   ■ a graphical user interface controller for controlling a graphical user interface;
      wherein said graphical user interface controller controls display of said graphical user interface in a synchronized manner to said signaling session.

### Drawing presentation

Other features, aims and advantages of the invention will become apparent through reading of the detailed description below with reference to the illustrative and non limiting drawings, wherein:
- figure 1 is a schematic view of an example of a system of the invention;
- figure 2 is a schematic view of a content display and its connectors according to an example of the invention;
- figure 3 is a flowchart showing steps of an implementation of a method of the invention;
- figure 4 is a flowchart showing further steps of an implementation of a method of the invention.

### Detailed description

### System for providing an interactive content player

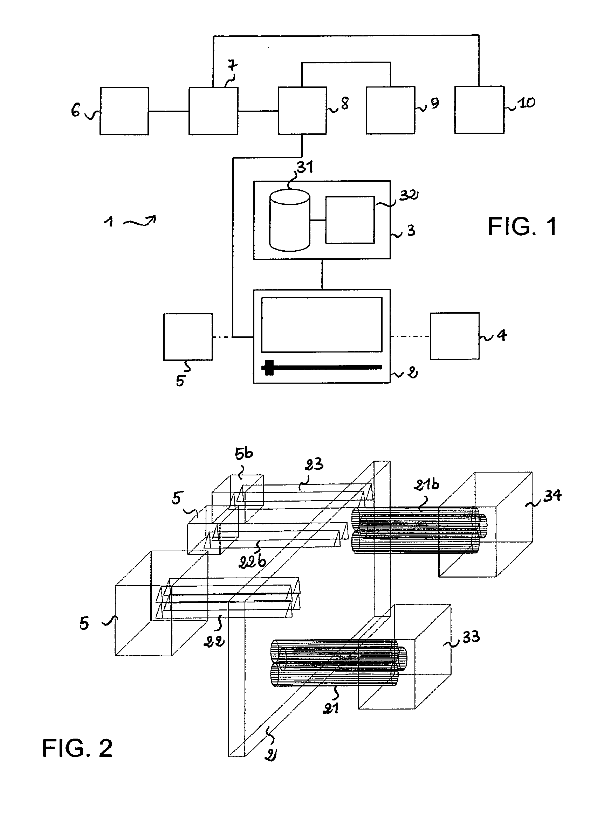

In reference to figures 1 and 2, an example of a system 1 for providing an interactive content player 2 is hereafter described in detail.

The system 1 comprises a content player 2 adapted for playing a digital content.

The content player 2 can comprise native functions such as sending SMS, MMS or E-mail to distribute the content player on mobile telephone, E-mail boxes, etc.

These functions can be accessible through dedicated button(s) provided on the content player 2.

The digital content can be an audio or visual content such as music, audio advertising, visual advertising, video sequence, picture(s) or an application.

The system 1 also comprises a player manager 4 for adding said digital content into said content player 2.

The system 1 also comprises an application directory 3. The application directory 3 comprises a database 31 for storing available applications 33. One example of a simple application 33 is an application **33** that reaches a URL address. The URL address is entered by the player creator. Thus, the \URL can be changed at will..

The application directory **3** can comprise, for an application developer, a control panel **32** adapted for at least one of the following action:
- uploading said application **33** into said application directory **3**;
- defining application settings and billing parameters.

These actions enable an application developer to add his applications **33** into the application directory **3** and thus enriching the available applications **33** in the system **1.**

When the application developer adds an application **33** into the database **31** of the application directory **3,** he can define billing parameters, which concerns the way he wants to be remunerated for his application.

Billing parameters relates to the cost of the application **33** (free of charge or not), how payment is performed (prepaid credit with or without automatic refill of credit, postpaid or a combination of both).

For a player creator, the control panel **32** is adapted for at least one of the following action:
- selecting an application **33** stored in said application directory **3;**
- defining resource sizing needed by said application **33;**
- defining a traffic usage pattern for said application **33** for parting end user of said application **33** into two or more categories of end users; and
- defining an execution mode of said application **33.**

The system **1** can further comprise a resource allocation module **2** for computing needed resource amount for each category of end users.

Thus, the application directory **3** enables the player creator to select which application(s) **33** he would like to include into his content player. It also enables him to customize resource sizing, which concerns the maximum number of end users that can simultaneously run the content player **2** at the same time.

Traffic usage pattern can define how resources should be distributed according to country of location of the end-user terminal on which the content player **2** is run, or use limitation of the content player **2** to a selected group of end-user terminals.

The control panel **32** also enables entering a time credit to buy enabling the application **33** to be used during a determined duration, renewal mode defining the way time credit are bought automatically or not, and in particular the amount of initial credit to buy, of credit to automatically buy when the initial credit is over, the maximum of credit to consume.

The system **1** also comprises resources **5** needed for executing the application **33.** The resources can be chosen amongst the following:
- a gateway for initiating and receiving an audio call over circuit-switched networks, such as an ISDN;
- a gateway for initiating and receiving a video call over circuit-switched networks, such as 3G-324M, H.324 or H.320;
- a proxy server for initiating and receiving an audio call or a video call over packet-switched networks, such as SIP calls through a SIP server or H.323 calls via an H.323 gatekeeper;
- a gatekeeper for connecting different compatible end-user terminals, such as H.323;
- a presence registrar for handling real-time end user's presence, such as a SIP Registrar;
- a presence server for handling information associated to real-time end user's presence;
- an application server for executing applications;
- a gateway for converting a content from one protocol to another protocol, such as a Flash/SlP gateway or a Silverlight/SlP gateway;
- a video streaming server for delivering continuous video data strings;
- a connector to a Short Message Service (SMS) Center, a Multimedia Message Service (MMS) Center or a Wireless Application Protocol (WAP) Gateway;
- a Storage Area Network (SAN) for providing high capacity data storage;
- a Multipoint-Control Unit (MCU) for enabling display of several end user's videos in a single screen;
- a connector to a social media, or a virtual world such as SecondLife™, Facebook™, MySpace™ or Twitter™;
- a connector to a TV terminal;
- a Video transcoding unit for enabling communication between at least two terminals of different types, for example it adapts video resolution, bandwidth...;
- a media server for providing media processing capability for video content;
- an Interactive Voice and Video platform for enabling the design of interactive voice/video application to be uploaded the application directory, such as an IVVR
- a connector to a call center;
- a database for storing digital data; or
- data bandwidth and network connectivity.

The content player **2** must then access the application **33** and to resources **5** so that the application **33** can be run in the content player **2.** Thus, the content player **2** is provided with at least one first connector **21** for accessing an application **33** and at least one second connector **22** for accessing resources **5.** The resources **5** accessible through the second connector **22** can be internal or external to the system **1.**

ln some cases, a player creator might need special services, for example dedicated resources to run dedicated applications **34.** These resources can be seen as a resources package. The content player **2** then comprises at least one additional first connector **21b** for accessing the dedicated application **34.** The content player **2** might as well comprise at least one additional second connector **22b** for accessing resources **5** needed by the dedicated application. When needed resources are not available as a basic service, they can be accessed through at least one third connector **23** additionally provided in the content player **2.** This eases the player creator work.

The system can provide the content player **2** with graphical user interface (GUI) control tool. In this aim, the system **1** can also comprise a circuit-switched or packet-switched network over which the content player **2** and the application **33** or dedicated application **34** are linked. These networks enable establishing a telephony call and initializing a signaling session over said telephony call. The system **1** also comprises a graphical user interface controller for controlling a graphical user interface. The graphical user interface controller controls display of the graphical user interface in a synchronized manner to the signaling session. The graphical user interface can appear on the content player as a checkered window defining portions. An action is assigned to each portion, for example run an application, answering quiz questions...

The system **3** can comprise a dashboard **6.** The dashboard **6** enables the application developer or the player creator to monitor traffic and use of the application **33** or the content player **2.** The dashboard **6** retrieves data from a statistics server **7** which is connected to a billing server **8** and to the application profile server **10.** The statistics server **7** computes needed figures such as percentage of use of resources with respect to application parameters, percentage of end user using the application or content player **2** in which country, percentage of capacity (number of users over the maximum number of users defined as application parameters), media where the content player **2** has been accessed from (SecondLife™, Facebook™, MySpace™ or Twitter™, etc.), duration of connection of a user, number of content player **2** in use.

The billing server **8** stores data on use of application **33** or content player **2.**

The dashboard **6** enables the application developer or the player creator to adjust the application parameters or billing parameters with respect to the real use and need of the application **33** or content player **2.** It also enables them to monitor use of the application **33** or the content player, such as how long and end user uses the application **33** or the content player **2.**

### Method for providing an interactive content player

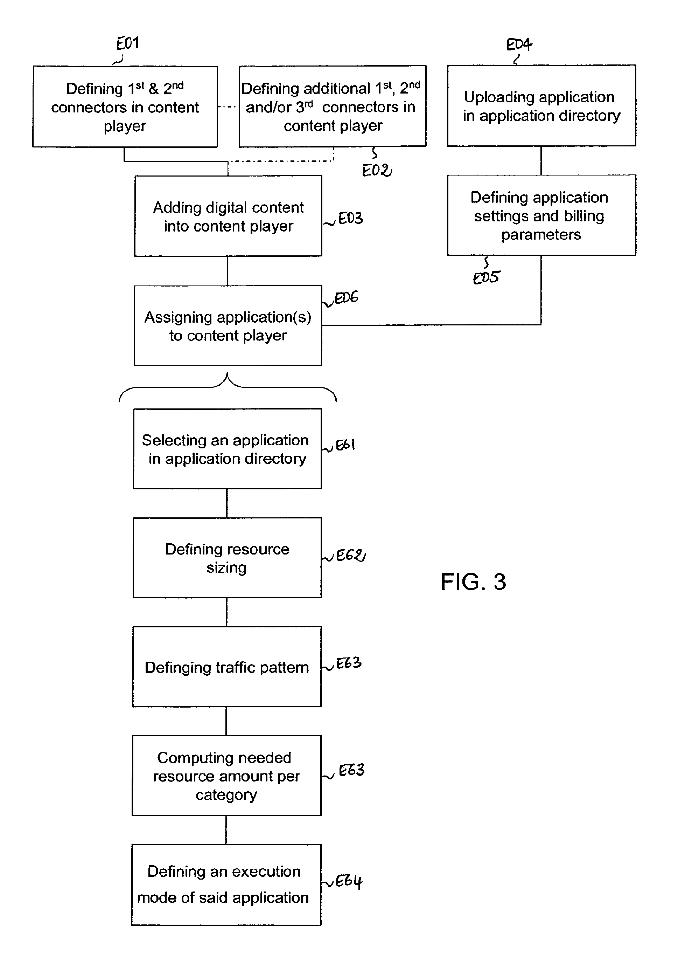

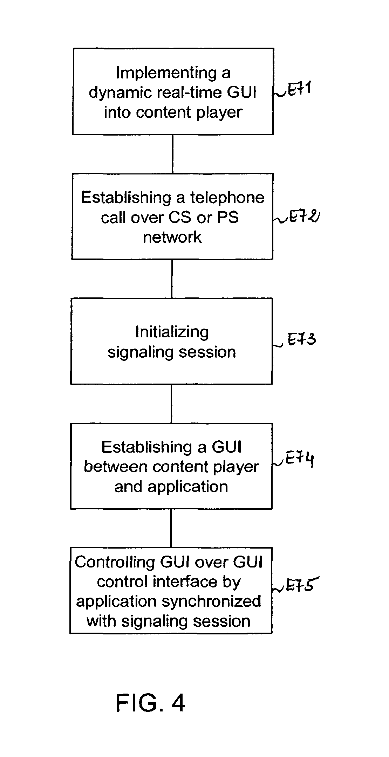

In reference to figures 3 and 4, an example of a method for providing an interactive content player **2** is hereafter described in detail.

The method comprises the steps of:
- providing the content player **2** adapted for playing a digital content;
- adding **E03** by a player manager said digital content into said content player;
- assigning **E06** by an application directory at least one application to said content player;
- defining **E01** first connectors **21** in said content player **2** for accessing said application **33**; and
- defining **E01** second connectors **22** in said content player **2** for accessing resources **5** needed for executing said application **33**.

The steps of adding **E03** and assigning **E06** are controlled by a player creator on his terminal.

One or more applications **33** can be assigned to the content player **2** of the digital content. One application assignment is succeeded with one digital pointer.

An exemplary way to carry out the assignment is to use a "drag and drop" method. To this end, the end-user terminal can control a control panel **32** displayed on the end-user terminal. Applications **33** are displayed as icons. Then the end user can drag and drop using one of the following: a mouse, a joystick, a gamepad, a touch screen, a graphic tablet, etc. The "drag and drop" method is well-known and is not further described in detail.

The step of assigning **E06** can comprise the following sub-steps:
- selecting **E61** an application **33** stored in said application directory **3**;
- defining **E62** resource sizing needed by said application **33;**
- defining **E63** a traffic usage pattern for said application **33;**
   and
- defining **E65** an execution mode of said application **33.**

After defining resource sizing, a resource allocation module **9** computes **E64** the actual resources **5** needed by the application **33**.

Then, if a traffic usage pattern is defined, a virtualization of resources is performed. Indeed, traffic usage pattern aims at parting use of the application **33** according to one or more criteria into two or more categories of end users. Thus, resources **5** needed as defined in the resource sizing are split and allocated according to the traffic pattern. Once the player creator defines a traffic usage pattern, determined amounts of resources is computed by the resource allocation module and allocated to the different categories of users. The total sum of the allocated resources is equal to the actual resources **5** needed by the application **33** defined in resource sizing.

The execution mode can be selected among:
- selecting an interactive area defined in said digital content or said content player **2,** said interactive area appearing at a determined moment and location during playing of said digital content;
- selecting a button-style interface defined in said content player **2;**
- sending a message through a device or software providing telephony services;
- initiating an audio call or a video telephony call over circuit-switched, packet-switched networks or any communication access network;
- initiating an event from a software program adapted to communicate with said content player.

The interactive area can be defined as a moving object when it is displayed, as following another moving object such as a moving video window.

Interactive area can have different size and shape. Size and shape can also vary in time.

The message can be an SMS or an MMS or an electronic message.

The event can be a remote procedure call between two terminals in different environments, or SOAP-services.

The result of the creation of the content player **2** can be just a digital file comprising lines of code with information and pointers corresponding to information needed to play the content player with the user's settings.

Information comprised in the digital file can be one or more of: a content player identification (for identifying the content player among other content players); a user identification (for identifying the end-user terminal); application identification; application settings; execution mode, etc.

User identifications enable parting end-user terminal into different categories of end users. For example, to know whether the end user belongs to a particular category with privileges or to know to which social class the end user belongs so that offered services are customised consequently.

User identifications also enable one-to-one communication, for example via SMS, MMS or electronic message using the native functions of the content player **2.**

The assembling of the content player **2,** digital content and applications **33** can be carried out whether prior to transmitting the content player **2** to an end-user terminal or after transmitting the content player **2** to the end-user terminal.

Edition of the content player **2** can be made available at any time forming an updated content player **2** through the control panel **32** and the player manager **4.** End users that have opened the content player **2,** can be informed about content player **2** being updated, for example by a written message or voice message (voice and/or visual data). If end-user terminals disconnect and reconnect to the service, they will then receive the updated content player.

The written message or voice message can carry various pieces of information other than the one stating that the content player **2** has been updated.

The method can further comprise adding said application into said application directory, that is:
- uploading **E04** said application **33** into said application directory **3;**
- defining **E05** application settings and billing parameters. These actions are done through a control panel.

Thus, it is possible to enrich the application directory **3** with new applications **33** developed by certified developers (owner of the application directory).

It is also possible for a third party application developer to develop his own home application **33.** The method is then open to third party application. The application developed by a third party can use resources **5** available in the system or external resources. The content player **2** will then access the application **33** in a same way as native application **33,** *i.e.* it will access the application **33** through the first connector **21** and to the resources **5** (internal or external to the system) through the second connector **22.**

The application **33** does not necessarily need access to resources **5** internal to the system when the application developer does not wish it to.

Application settings enable the (third party or certified) application developer to set limit for use of the application **33.** For example, he can set limit to private use only, to public use, to a group of users (for example limitation to user in one country or another).

Application settings can be an identifier for the application **33,** or information on the application **33,** the service provided by the application **33,** link to screen shot, etc.

In case, the use of the application **33** is not free, billing parameters enable the (third party or certified) application developer to monetize his application **33** as described in the description of the system. Billing parameters are then stored in a billing server **8.** The billing server **8** also stores information on use of the application **33** according to billing parameters (for example, when the application was used, for how long, how many times, from which location, traffic pattern and peaks, etc.).

ln some cases, the application developer would need special or additional resources **56** for a particular application **34.** It should be seen as packaged resources. At least one additional first connector **21b** is then defined in the content player **2** for accessing the particular application **34** to which a Unique Application IDentifier (UAID) is assigned. Thus, thanks to the UAID, the packaged resources can be targeted.

If needed resources **5** are available in the system, at least one additional second connector **22b** is defined in the content player **2** for accessing these resources **5.**

If additional resources **56** are needed and are not available in the system, at least one third connector **23** is defined in the content player **2** for accessing these additional resources **56.**

ln the content player **2,** both additional second connector **22b** and third connector **23** can be available or open.

Resources **5** can be those listed in the description of the system here above.

The method can also provide the end user with a graphical user interface to be display on his end-user terminal. This graphical user interface enables the end user to control display of a visual content played by the content player.

Thus, the method can comprise the following steps.
- implementing **E71** into the content player a dynamic real-time context sensitive graphical user interface for display by said content player;
- establishing **E72** a telephony call over a circuit-switched or packet-switched network between said content player **2** and said application **33;**
- initializing **E73** a signaling session over said telephony call;
- establishing **E74** a graphical user interface control channel between said content player **2** and said application **33;**
- controlling **E75** said graphical user interface by said application **33** over said graphical user interface control channel;
   wherein said signaling session and said graphical user interface control channel are synchronized.

The graphical user interface is then synchronized with the running digital content or the application; it changes according to the digital content or the application and enables more interactivity.

### The media support

The method for providing an interactive content player described here above can be implemented by a computer program.

The computer program can be stored in a media support readable by the system **1** for interactive communications described here above.

The media support can be a CD-ROM, a DVD, a server, a memory stick, an SD-card and alike or any support that enables storage of a computer program.

## Claims

1. A method for providing an interactive content player (2), comprising:
- providing the content player (2) adapted for playing a digital content;
- adding (E03) by a player manager (4) said digital content into said content player (2);
- assigning (E06) by an application directory (3) at least one application (33) to said content player (2);
- defining (E01) art least one first connector (21) in said content player (2) for accessing said application (33); and
- defining (E01) at least one second connector (22) in said content player (2) for accessing resources (5) needed for executing said application (33).

2. The method of claim 1, wherein assigning (E06) comprises:
- selecting (E61) an application (33) stored in said application directory (2);
- defining (E62) resource sizing needed by said application (33); and
- defining (E65) an execution mode of said application (33).

3. The method of claim 1, wherein assigning further comprises defining (E63) a traffic usage pattern for said application (33) for parting use of said application (33) into two or more categories of end users; and computing (E64) needed resource amount for each category.

4. The method of any claims 1 to 3, wherein said execution mode is selected among:
- selecting an interactive area defined in said digital content or said content player (2), said interactive area appearing at a determined moment and location during playing of said digital content;
- selecting a button-style interface defined in said content player (2);
- sending a message through a device or software providing telephony services;
- initiating an audio call or a video telephony call over circuit-switched, packet-switched networks or any communication access network;
- initiating an event from a software program adapted to communicate with said content player (2).

5. The method of claim 4, wherein said message is an SMS or an MMS or an electronic message.

6. The method of claim 4, wherein said event is a remote procedure call between two terminals in different environments, or SOAP-services.

7. The method of any claims 1 to 6, further comprising adding said application (33) into said application directory (3); wherein adding comprises:
- uploading (E04) said application into said application directory (3);
- defining (E05) application settings and billing parameters.

8. The method of any claims 1 to 7, wherein said application (33) is a determined application (34), and wherein said method further comprises at least:
- defining (E02) additional first connector (21 b) in said content player (2) for accessing said determined application (33);
- assigning a Unique Application IDentifier to said determined application;
and at least one of the following:
- defining (E02) additional second connector (22b) in said content player for accessing said resources (5) needed for executing said determined application;
- defining (E02) third connector (23) in said content player for accessing additional resources needed for executing said determined application.

9. The method of any claims 1 to 8, further comprising:
- implementing (E71) into said content player (2) a dynamic real-time context sensitive graphical user interface for display by said content player (2);
- establishing (E72) a telephony call over a circuit-switched or packet-switched network between said content player (2) and said application (33);
- initializing (E73) a signaling session over said telephony call;
- establishing (E74) a graphical user interface control channel between said content player and said application;
- controlling (E75) said graphical user interface by said application (33) over said graphical user interface control channel;
wherein said signaling session and said graphical user interface control channel are synchronized.

10. A system (1) for providing an interactive content player (2), comprising:
- a content player (2) adapted for playing a digital content;
- a player manager (4) for adding said digital content into said content player (2);
- an application directory (3) for assigning at least one application (33) to said content player (2);
- resources (5) needed for executing said application (33);
and
wherein said content player (2) is provided with at least one first connector (21) for accessing said application (33) and at least one second connector (22) for accessing said resources (5).

11. The system of claim 10, wherein the application directory (3) comprises a control panel (32) adapted for at least one of the following action:
- uploading said application (33) into said application directory (3);
- defining application settings and billing parameters;
- selecting an application 33 stored in said application directory (3);
- defining resource sizing needed by said application (33);
- defining a traffic usage pattern for said application (33) for parting end user of said application (33) into two or more categories of end users; and
- defining an execution mode of said application (33).

12. The system of claim 11, further comprising an resource allocation module (9) for computing needed resource amount for each category of end users.

13. The system (1) of any claims 10 to 12, wherein the application director (3) comprises a database (31) for storing said application (33) into said application directory (3).

14. The system (1) of any claims 10 to 13, wherein said application (33) is a determined application (34), wherein said content player (2) further comprises:
- at least one additional first connector (21 b) for accessing said determined application (34);
- at least one additional second connector (22b) for accessing said resources needed for executing said determine application (33);
- at least one third connector (23) for accessing additional resources needed for executing said determined application (33).

15. The system (1) of any claims 10 to 14, further comprising:
- a circuit-switched or packet-switched network between said content player (2) and said application (33) for establishing a telephony call and initializing a signaling session over said telephony call;
- a graphical user interface controller for controlling a graphical user interface;
wherein said graphical user interface controller controls display of said graphical user interface in a synchronized manner to said signaling session.
